# EUROPÄISCHE PATENTSCHRIFT

(11) **EP 3 479 429 B1**
(45) Veröffentlichungstag und Bekanntmachung des Hinweises auf die Patenterteilung: **15.03.2023**
(21) Anmeldenummer: 17732449.8
(22) Anmeldetag: 26.06.2017
(51) Int. Cl.: H01M 8/10, H01M 4/86, H01M 4/88, H01M 4/92

(54) **VERFAHREN ZUR HERSTELLUNG EINES GETRÄGERTEN KATALYSATORMATERIALS FÜR EINE BRENNSTOFFZELLE**
METHOD FOR PRODUCING A SUPPORTED CATALYST MATERIAL FOR A FUEL CELL
PROCÉDÉ DE FABRICATION D'UN MATÉRIAU DE CATALYSEUR, DÉPOSÉ SUR UN SUPPORT, POUR UNE PILE À COMBUSTIBLE

(30) Priorität: 30.06.2016 DE 102016111981
(43) Veröffentlichungstag der Anmeldung: 08.05.2019
(73) Patentinhaber: Audi AG, 85045 Ingolstadt (DE); Volkswagen AG, 38440 Wolfsburg (DE)
(72) Erfinder: GRAF, Tanja, 38126 Braunschweig (DE); SCHLADT, Thomas, 38126 Braunschweig (DE)
(74) Vertreter: Hentrich Patent- & Rechtsanwaltspartnerschaft mbB
(86) Internationale Anmeldenummer: PCT/EP2017/065642
(87) Internationale Veröffentlichungsnummer: WO 2018/001930

(56) Entgegenhaltungen:
- WO-A2-2012/106349
- JP-A- 2013 127 869

## Beschreibung

Die Erfindung betrifft ein Verfahren zur Herstellung eines geträgerten Katalysatormaterials für eine katalytische Brennstoffzellenelektrode. Die Erfindung betrifft ferner ein mit dem Verfahren herstellbares Katalysatormaterial, eine Elektrodenstruktur für eine Brennstoffzelle mit einem solchen Material sowie eine Brennstoffzelle mit einer solchen Elektrodenstruktur.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für *membrane electrode assembly*), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (*stack*) angeordneter MEA gebildet, deren elektrische Leistungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

Für die Katalyse der oben genannten Brennstoffzellenreaktionen kommen Platin beziehungsweise Platinlegierungen als katalytische Materialien zum Einsatz. Da es sich bei den Reaktionen um einen elektrochemischen Oberflächenprozess handelt, wird eine möglichst große katalytische Oberfläche (ECSA) angestrebt. Hierzu werden Partikel des katalytischen Materials im Größenbereich weniger Nanometer auf einen Kohlenstoffträger mit großer Oberfläche aufgebracht. Im Laufe des Brennstoffzellenbetriebs geht jedoch ein Teil der elektrischen Leistung durch Elektrodendegradation verloren. Verantwortlich dafür sind vor allem Verlust von ECSA und Aktivität aufgrund (ungünstiger) Betriebsbedingungen. Die zugrunde liegenden Mechanismen umfassen unter anderem Auflösung des Platins vom Kohlenstoffträger (Platinkorrosion), wodurch die Partikel ihren elektrischen Kontakt verlieren und nicht mehr zur effektiven Katalyse beitragen. Des Weiteren kommt es zur Agglomeration (Zusammenwachsen) der Partikel, wodurch die katalytische Oberfläche abnimmt. Weitere Degradationsmechanismen umfassen Korrosion der Legierungselemente Kobalt beziehungsweise Nickel aber auch des Korrosion von Platin selbst, Wachstum der Platin-Nanopartikel durch Ostwald-Reifung, Wachstum der Platin-Nanopartikel durch Migration und Sintern auf der Kohlenstoffoberfläche.

Um dem Verlust katalytischer Aktivität entgegenzuwirken und so die Leistungsanforderungen über die Betriebszeit der Brennstoffzelle gewährleisten zu können, wird üblicherweise bei der Herstellung der Elektroden eine überschüssige Menge des Edelmetalls eingesetzt. Diese Maßnahme ist jedoch recht kostenintensiv.

Ferner ist der Einsatz stabilisierter Kohlenstoffträger bekannt. Hier wird zwar die Korrosion (Auflösung) des Kohlenstoffs verbessert jedoch nicht die Anhaftung der Katalysatorpartikel.

Des Weiteren sind nanostrukturierte Dünnschicht-Katalysatoren bekannt, bei denen die Platinmenge durch erhöhte Lebensdauer verringert werden kann. Jedoch entstehen durch die Nanostruktur Probleme bei der Abführung des Reaktionswassers.

Darüber hinaus wird die Aktivität des Katalysators durch Zulegieren weiterer Elemente (vor allem Kobalt und Nickel) erhöht, um einen höheren Brennstoffdurchsatz und damit eine hohe elektrische Leistung gewährleisten zu können. Die Problematik der mangelnden Anhaftung wird durch die Zugabe von Legierungselementen aber nicht behoben. Aufgrund des im Vergleich zu Platin unedleren Charakters dieser Elemente sind solche Katalysatoren sogar wesentlich korrosionsanfälliger.

Es bestehen auch Forschungsarbeiten mit neuen Katalysatorträgerkonzepten, bei denen Haftvermittlerschichten auf oxidischer Basis die Anhaftung des Katalysatormaterials verbessert werden soll. Die eingesetzten Oxide sind jedoch zumeist schlechte Leiter, sodass es zu Leistungsverlusten aufgrund von Übergangswiderständen zwischen Katalysator und Träger kommt.

DE 698 24 875 T2 beschreibt, auf einer Trägerfolie nicht leitende nanostrukturierte Trägerstrukturen aus einem organischen Pigment zu erzeugen. Diese Trägerstrukturen werden mittels physikalischer oder chemischer Gasphasenabscheidung (PVD, CVD) beschichtet, um nanostrukturierte Katalysatorelemente zu erzeugen, welche anschließend durch einen Pressvorgang direkt auf die Polymerelektrolytmembran der Brennstoffzelle übertragen werden. Die Katalysatorelemente können dabei durch sequentielles Abscheiden unterschiedlicher Materialien unterschiedliche Zusammensetzungen an ihrer Oberfläche und in ihrem inneren Volumen aufweisen.

Darüber hinaus ist die Zumischung von Metallcarbiden zu dem katalytischen Material oder das direkte Aufbringen von Metallcarbiden auf dem Kohlenstoffträger bekannt (zum Beispiel EP 1842589 A1). Dabei kommt es allenfalls zu einer physikalischen Anhaftung des Carbids an das Trägermaterial.

US 2006/0183633 A1 beschreibt eine Katalysatorstruktur für die Anode einer Direktmethanol-Brennstoffzelle (DMFC). Diese umfasst ein Trägermaterial aus Al, Ti, TiN, W, Mo oder Hf, auf der lokale Erhebungen (Nanodots) aus einem Metallcarbid, wie WC, MoC oder TaC und auf diesen katalytische Partikel mittels physikalischer oder chemischer Gasphasenabscheidung abgeschieden sind. Sowohl die Erhebungen als auch die katalytischen Partikel bestehen aus einem Metallcarbid, wie WC, MoC oder TaC, und können optional mit einer Beschichtung aus Kohlenstoff-Nanohorn (CNH) versehen sein.

Die katalytischen Partikel liegen in der Regel auf einem elektrisch leitfähigen Trägermaterial großer spezifischer Oberfläche vor, wobei es sich häufig um ein partikuläres kohlenstoffbasiertes Material handelt, bespielweise Kohlenstoff-Nanoröhrchen (CNT) oder dergleichen. Die Abscheidung der katalytischen Partikel auf dem Trägermaterial erfolgt zumeist mit nasschemischen Methoden, beispielsweise durch Sol-Gel-Verfahren unter Verwendung metallorganischer Vorläuferverbindungen des katalytischen Metalls (zum Beispiel US 8,283,275 B2). Zudem ist auch die Abscheidung katalytischer Edelmetallpartikel auf den Kohlenstoffträger aus der Gasphase bekannt (zum Beispiel US 7,303,834 B2). Anschließend wird der so geträgerte Katalysator mit einem lonomer gemischt und in Form einer Paste oder Suspension als Beschichtung auf ein Kohlenstoffpapier, direkt auf die Polymerelektrolytmembran oder auf die Gasdiffusionslage aufgebracht und getrocknet.

Der Erfindung liegt nun die Aufgabe zugrunde, ein Verfahren zur Herstellung eines geträgerten Katalysatormaterials für eine katalytische Brennstoffzellenelektrode anzugeben, das zu einem Material führt, das die Probleme des Standes der Technik zumindest teilweise löst. Insbesondere soll ein Katalysatormaterial hergestellt werden, das eine verbesserte Anhaftung des katalytischen Materials auf dem Trägermaterial und somit eine erhöhte Stabilität und längere Lebensdauer aufweist.

Diese Aufgabe wird durch ein Herstellungsverfahren, ein mit dem Verfahren herstellbares geträgertes Katalysatormaterial, eine Elektrodenstruktur mit einem solchen sowie eine Brennstoffzelle mit einer solchen Elektrodenstruktur mit den Merkmalen der unabhängigen Ansprüche gelöst. Bevorzugte Ausgestaltungen der Erfindung ergeben sich aus den übrigen, in den Unteransprüchen genannten Merkmalen und der nachfolgenden Beschreibung.

Das erfindungsgemäße Verfahren zur Herstellung eines geträgerten Katalysatormaterials für eine Brennstoffzellenelektrode, umfasst die Schritte (insbesondere in der angegebenen Reihenfolge):
- Bereitstellen eines elektrisch leitfähigen, kohlenstoffbasierten Trägermaterials;
- Abscheiden einer Carbid bildenden Substanz aus der Gasphase auf das kohlenstoffbasierte Trägermaterial unter Erzeugung einer Carbid-haltigen Schicht durch chemische Reaktion der Carbid bildenden Substanz mit dem Kohlenstoff des Trägermaterials und
- Abscheiden eines katalytisch aktiven Edelmetalls oder einer Legierung eines solchen aus der Gasphase unter Ausbildung einer katalytischen Schicht.

Die Erfindung zeichnet sich somit dadurch aus, dass eine chemische Anbindung zwischen der Carbid bildenden Substanz und dem Trägermaterial durch Erzeugen eines Carbids oder einer carbidartigen Bindung zwischen der Substanz und dem Kohlenstoff hergestellt wird. Hierdurch kommt es zu einer Verbesserung der Anbindung des Katalysatormaterials an der Oberfläche.

Bei bekannten Verfahren, bei denen das katalytische Material nasschemisch oder durch reinphysikalische Abscheidungsprozesse aus der Gasphase abgeschieden wird, liegt nur eine physikalische Anbindung durch Adsorption vor, die naturgemäß schwächer ist als eine chemische (kovalente) Bindung. Aufgrund der stabilen Anbindung wird die Diffusion der katalytischen Strukturen auf der Kohlenstoffträgeroberfläche und somit ihr Zusammenwachen (Sintern) verhindert. Carbide zeichnen sich zudem durch eine hohe mechanische und chemische Stabilität und außerdem durch eine hohe elektrische Leitfähigkeit aus. Somit können Leistungsverluste aufgrund von Übergangswiderständen zwischen Katalysator und Träger minimiert werden.

Es versteht sich, dass die Carbid-haltige Schicht nicht zwangsläufig eine eigene Carbidphase ausbilden muss, etwa in Form auf der Oberfläche gewachsener Nano-Kristallite mit kristallographischer Carbidstruktur. Vielmehr reicht es aus, dass an der unmittelbaren Grenzschicht zwischen Kohlenstoff und der Carbid-haltigen Schicht Carbid-Bindungen oder carbidartige Bindungen entstehen, das heißt, es kommt zu einer kovalenten Bindung zwischen dem Carbid bildenden Element und dem Kohlenstoff, sodass chemische Bindungsverhältnisse vorliegen, die lokal denen in einem Carbid-Kristall entsprechen, aber nicht die einem Kristall entsprechende Periodizität und Fernordnung aufweisen. Zudem kann an diese Grenzschicht eine Phase der reinen, nicht reagierten Carbid bildenden Substanz anschließen, die ebenfalls Teil der Carbid-haltigen Schicht ist.

Ferner kommt es an der Grenzschicht zwischen der Carbid-haltigen Schicht und der katalytischen Edelmetallschicht zur Ausbildung einer stabilen Legierung zwischen der Carbid bildenden Substanz (nachfolgend auch als Carbidbildner bezeichnet) und dem Edelmetall beziehungsweise seiner Legierung. Somit wird eine stabile Anbindung des Katalysators an den Kohlenstoffträger über alle Grenzflächen erzielt.

Das Abscheiden der Carbid bildenden Substanz sowie das Abscheiden des katalytisch aktiven Edelmetalls oder seiner Legierung erfolgt aus der Gasphase, also nicht durch einen nasschemischen Prozess aus einem Lösungsmittel. Durch die Abscheidung aus der Gasphase, ist es möglich, eine gezielte Strukturierung auf atomarer Ebene zu erreichen, die sich über klassische nasschemische Synthesewege nicht darstellen lassen. Zudem ermöglicht die Gasphasenabscheidung eine deutliche Verringerung der eingesetzten Mengen, insbesondere des katalytischen Edelmetalls. beziehungsweise seiner Legierung. So wird nur Edelmetall an der Oberfläche eingesetzt, an der die katalytische Reaktion abläuft, während im Inneren ein kostengünstigeres Material vorliegt.

Die Abscheidungen kann mit einem beliebigen Gasphasenabscheidungsprozess erfolgen. Geeignete Verfahren umfassen die physikalische Gasphasenabscheidung (Physical Vapor Deposition, PVD), die chemische Gasphasenabscheidung (Chemical Vapor Deposition, CVD), Atomlagenabscheidung (Atomic Layer Deposition, ALD), und andere.

Hauptaufgabe der carbid-haltigen Schicht ist, eine stabile Haftung des Edelmetalls beziehungsweise seiner Legierung auf dem Trägermaterial zu gewährleisten und gleichzeitig die katalytische Struktur in ihrem Inneren durch ein vergleichsweise preisgünstiges Material zu aufzubauen. Um eine gute Anbindung an den Kohlenstoffträger zu erzielen, ist ein passendes Kristallgitter des Carbids beziehungsweise der Carbid bildenden Substanz von Vorteil, das heißt eine ähnliche Kristallstruktur und eine ähnliche Gitterkonstante wie die des Kohlenstoffmaterials. Um weiterhin eine stabile Anbindung der katalytischen Oberflächenschicht aus Edelmetall zu erzielen, ist ferner eine hohe Oberflächenenergie und eine mit dem katalytischen Edelmetall oder seiner Legierung kompatible Gitterstruktur wünschenswert, wobei hier bevorzugt ist, dass die Gitterkonstante des Carbids beziehungsweise der Carbid bildenden Substanz höchstens der der katalytischen Oberflächenschicht, insbesondere der von Platin entspricht. Durch die Wahl eines Gitters des Carbids mit geringfügig kleinerer Gitterkonstante wird eine Kontraktion des Edelmetallgitters und durch die hierdurch verursachten Verzerrungseffekte des Kristallgitters sowie auch durch quantenmechanische Wechselwirkungen zwischen den Gittern eine erhöhte Aktivität sowie eine besonders dichte Kugelpackung des Edelmetalls erzielt. Insgesamt wird die Adhäsion durch die Oberflächenenergie, eine gute Übereinstimmung zwischen den Kristallgittern hinsichtlich Symmetrie und Gitterparametern, sowie den Bindungszuständen an der Grenzfläche (Verschiebung des d-Bandzentrums) bestimmt. Um die Aufnahme beziehungsweise Abgabe von Elektronen während der katalytischen, am katalytisch aktiven Edelmetall stattfindenden Brennstoffzellenreaktionen zu ermöglichen, sollte das Volumenmaterial der Kernschicht ferner eine gute elektrische Leitfähigkeit aufweisen.

Geeignete Carbid bildende Substanzen, die diese Kriterien erfüllen, umfassen Titan (Ti), Zirkonium (Zr), Hafnium (Hf), Wolfram (W), Molybdän (Mo), Bor, (B), Vanadium (V), Aluminium (AI), Scandium (Sc), Yttrium (Y), Silizium (Si), Chrom (Cr) und Nickel (Ni) oder Mischung von zwei oder mehr dieser Elemente. Von diesen ist Titan besonders bevorzugt, das mit Kohlenstoff zu Titancarbid TiC reagiert.

Für die Gasphasenabscheidung der Carbid bildenden Substanz wird entweder das reine Element als solches oder eine chemische Vorläuferverbindung von diesem eingesetzt, in die Gasphase überführt und auf der Oberfläche des kohlenstoffbasierten Trägermaterials abgeschieden. Dabei kommt es spontan zur Ausbildung des entsprechenden Carbids beziehungsweise der carbidartigen Bindung durch chemische Reaktion mit Kohlenstoff.

Die Schichtdicke der Carbid-haltigen Schicht wird vorzugsweise möglichst gering im Bereich weniger Atomlagen bezüglich der Carbid bildenden Substanzen gewählt. In vorteilhafter Ausführung liegt die Schichtdicke im Bereich von durchschnittlich 1 Atomlage bis 50 Atomlagen, insbesondere von durchschnittlich 1 Atomlage bis 20 Atomlagen, vorzugsweise von durchschnittlich 1 bis 10 Atomlagen. Diese Schichtdicken reichen aus, um die gewünschte Carbidentstehung zu bewirken.

Ebenso wird die Schichtdicke der Oberflächenschicht des katalytisch aktiven Edelmetalls oder seiner Legierung bevorzugt so dünn wie möglich gewählt, um das teure Material auf der Oberfläche möglichst vollständig zugänglich zu machen. Insbesondere weist die Oberflächenschicht eine Schichtdicke von durchschnittlich 1 bis 6 Atomlagen auf, vorzugsweise von 1 bis 4 Atomlagen und besonders bevorzugt von durchschnittlich 1 bis 2 Atomlagen.

Die Einstellung der Schichtdicken der einzelnen Schichten im Bereich weniger Atomlagen erlaubt die gezielte Nutzung von Grenzflächeneffekten für die Brennstoffzellenkatalyse. Die Schichtdicken können durch geeignete Wahl der Dauer der Gasphasenabscheidungsprozesse in einfacher Weise eingestellt werden.

Als Edelmetall für die katalytische Oberflächenschicht kommen insbesondere Metalle der Platingruppe infrage, umfassend Ruthenium (Ru), Rhodium (Rh), Palladium (Pd), Osmium (Os), Iridium (Ir) und Platin (Pt) oder eine Legierung dieser Metalle. Insbesondere umfasst die Oberflächenschicht Platin oder eine Platinlegierung, vorzugsweise im Wesentlichen reines Platin.

In bevorzugter Ausgestaltung der Erfindung erfolgt das Abscheiden der Carbid bildenden Substanz und das Abscheiden des katalytisch aktiven Edelmetalls oder seiner Legierung einander zeitlich überschneidend, wobei eine graduelle Anreicherung des katalytisch aktiven Edelmetalls oder seiner Legierung beziehungsweise eine graduelle Abreicherung der der Carbid bildenden Substanz in der abgeschiedenen Schicht von innen nach außen erzeugt wird. Dies kann erfolgen, indem die relativen Anteile des Carbidbildners und des Edelmetalls oder seiner Legierung in der Gasphase während des Abscheidungsprozesses kontinuierlich oder schrittweise verändert werden. Beispielsweise kann der Anteil des Carbidbildners von 100 % bis 0 % und der des Edelmetalls oder seiner Legierung von 0 % auf 100 % während des Abscheidungsprozesses verändert werden. Eine derartige Einstellung eines Gradienten ist mit den genannten Gasphasenabscheidungsprozessen einfach darstellbar. Das Produkt ist ein kontinuierlicher Schichtaufbau, bei dem der Gehalt des Carbidbildners von innen nach außen abnimmt und der Gehalt des Edelmetalls oder seiner Legierung entsprechend zunimmt. Mit Vorteil besteht die äußerste Schicht beziehungsweise zumindest die äußerste Atomlage zu 100 % aus dem katalytischen Edelmetall beziehungsweise seiner Legierung.

Gemäß einer weiteren Ausgestaltung des Verfahrens wird nach dem Abscheiden der Carbid bildenden Substanz und vor dem Abscheiden des katalytisch aktiven Edelmetalls oder seiner Legierung eine Diffusionsbarriereschicht auf der Carbid-haltigen Schicht abgeschieden. Die Diffusionsbarriereschicht verhindert die Diffusion des elektrochemisch unedleren Materials des den Kern bildenden Carbidbildners an die Oberfläche, wo die Atome des Carbidbildners durch die korrosive Umgebung in der Brennstoffzelle herausgelöst werden und der Katalysator somit destabilisiert wird. Die Diffusionsbarriereschicht wird vorzugsweise möglichst vollständig durch das katalytische Edelmetall oder seine Legierung in dem einen weiteren Gasphasenabscheidungsschritt abgedeckt. Geeignete Materialien für die Diffusionsbarriere umfassen beispielsweise Gold (Au), Palladium (Pd), Ruthenium (Ru) Wolfram (W), Osmium (Os), Rhodium (Rh) und Iridium (Ir) oder eine Mischung oder Legierung von diesen. Besonders bevorzugt ist Gold.

In weiterer vorteilhafter Ausgestaltung werden vor dem Abscheiden der Carbid bildenden Substanz Defektstellen und/oder Funktionalisierungen auf der Oberfläche des kohlenstoffbasierten Trägermaterials erzeugt. Unter Defektstellen werden vorliegend Fehler in der Kristallgitterstruktur des Kohlenstoffs verstanden, also Abweichungen von der restlichen Gitterstruktur. Die Defektstellen umfassen somit Fehlstellen, also unbesetzte Gitterplätze, aber auch das Vorhandensein von Fremdatomen (ungleich C) auf den Kohlenstoff-Gitterplätzen, die aufgrund ihres von C abweichenden Atomradius zu einer Gitterverzerrung führen, oder von Fremdatomen auf Zwischengitterplätzen im Sinne einer Interkalation, die ebenfalls zu einer Gitterverzerrung führen können. Geeignete Fremdatome umfassen beispielsweise Stickstoff (N), Bor (B), Sauerstoff (O), Silizium (Si) und andere. Unter Funktionalisierungen werden chemische Gruppen verstanden, die kovalent an den Kohlenstoff des Trägers gebunden vorliegen. Derartige Funktionalisierungen umfassen beispielsweise Wasserstoffgruppen (-H), Hydroxylgruppen (-OH), Carboxylgruppen (-COOH) und andere. Dadurch werden lokal die Bindungen, insbesondere Doppelbindungen der Kohlenstoffoberfläche gebrochen und es entsteht eine Funktionalisierung, die für die Reaktion mit dem Carbidbildner zur Verfügung steht. Sowohl Defektstellen als auch Funktionalisierungen auf der Oberfläche des kohlenstoffbasierten Trägermaterials dienen als Kondensationskeime für die Abscheidung der Carbid bildenden Substanz und begünstigen gleichzeitig aufgrund ihrer erhöhten Reaktivität die chemische Carbidbildung. Die so erzeugte lokale Bildung einer carbidartigen Verbindung zwischen Kohlenstoff und Carbidbildner fungiert als Keim für das weitere Wachstum der Schicht beziehungsweise der katalytischen Struktur auf dem Kohlenstoffträger. Die Abscheidung weiterer Atome des Carbidbildners erfolgt bevorzugt an dieser Stelle und es kommt zum Wachstum eines Partikels. Grundsätzlich sind aber auch Kohlenstoffträger einsetzbar, die nicht vorbehandelt wurden. Auch hier kommt es zu lokalen Carbidbildungen und einem Anwachsen der Strukturen um diese Keime.

Fehlstellen können durch Bestrahlung des Trägermaterials mit energiereicher elektromagnetischer Strahlung oder mit Teilchenstrahlung oder durch Behandlung mit einem Gasplasma erzeugt werden. Alternativ kann ein Trägermaterial eingesetzt werden, das bereits Defektstellen aufweist. Fremdatome oder Funktionalisierungen können ebenfalls durch Behandlung mit einem Gasplasma, insbesondere Wasserstoff (H₂), Sauerstoff (O₂), Stickstoff (N₂) oder andere, oder durch Behandlung mit einem chemischen Agens beispielsweise einer Säure eingebracht beziehungsweise erzeugt werden.

Das kohlenstoffbasierte Trägermaterial hat vorwiegend die Aufgabe, eine große spezifische Oberfläche für den aufgebrachten Katalysator darzustellen und außerdem die elektrische Anbindung zwischen den katalytischen Zentren des Materials und dem äußeren Stromkreis der Brennstoffzelle herzustellen. Vorzugsweise weist das kohlenstoffbasierte Trägermaterial eine poröse, partikuläre, also schüttfähige Struktur auf. Dies schließt insbesondere weitestgehend sphäroide Formen oder Fasern ein. Geeignete Materialien umfassen insbesondere Kohlenstoff-Nanostrukturen, beispielsweise Kohlenstoff-Nanoröhrchen, Kohlenstoff-Nanohörner, Kohlenstoff-Nanofasern, Kohlenstoff-Nanobänder, Kohlenstoffhohlkugeln; sowie Graphit, Vulkan, graphitisierter Kohlenstoff, Graphen, Ketjen Black, Acetylen-Schwarz (*Acetylene Black*)*,* Furnace Black, Carbon Black, aktivierter Kohlenstoff (*activated carbon*) und Mesophasen-Kohlenstoff (*meso phase carbon*).

Vorzugsweise liegt das Gefüge aus Carbid-haltiger Schicht und katalytischer Schicht und gegebenenfalls weiterer Schichten in Form von diskreten katalytischen Strukturen auf dem kohlenstoffbasierten Trägermaterial vor. Im Rahmen der vorliegenden Erfindung werden unter dem Begriff "katalytische Strukturen" Gebilde verstanden, die auf dem kohlenstoffbasierten Trägermaterial angeformt (aufgewachsen, abgeschieden) sind und im Wesentlichen diskret, das heißt, getrennt voneinander auf dem Trägermaterial angeordnet sind. Somit können zwischen benachbarten katalytischen Strukturen Lücken vorhanden sein, in denen das Trägermaterial frei liegt. Die katalytischen Strukturen können dabei eine beliebige Gestalt aufweisen, beispielsweise näherungsweise die Gestalt eines Kugelausschnitts, insbesondere einer Halbkugel. Es versteht sich jedoch, dass die Strukturen in der Regel nicht die Idealform einer Kugeloberfläche aufweisen und insbesondere durch die Kristallstruktur der eingesetzten Materialien bestimmt werden. Unabhängig von ihrer geometrischen Form weisen die katalytischen Strukturen eine Art Kern-Schale-Struktur auf, genauer gesagt einer "aufgeschnittenen" Kern-Schale-Struktur, bei der die "Schnittfläche" auf dem Trägermaterial und in Kontakt zu diesem angeordnet ist.

Ein weiterer Aspekt der vorliegenden Erfindung betrifft ein geträgertes Katalysatormaterial für eine Brennstoffzellenelektrode, das insbesondere mit dem erfindungsgemäßen Verfahren herstellbar ist und ein elektrisch leitfähiges, kohlenstoffbasiertes Trägermaterial, eine auf dem Trägermaterial abgeschiedene Carbid-haltige Schicht und eine auf der Oberfläche der Carbid-haltigen Schicht abgeschiedene katalytische Schicht eines katalytisch aktiven Edelmetalls oder einer Legierung eines solchen.

Das Material zeichnet sich durch eine exzellente Haftung der katalytischen Schicht und somit einer geringen Korrosions- und Sinterneigung aus. Ferner wird eine vergleichsweise geringe Menge des Edelmetalls oder seiner Legierung benötigt, da das Innere der katalytischen Strukturen im Wesentlichen durch den preiswerteren Carbidbildner ausgefüllt wird.

Ein weiterer Aspekt der vorliegenden Erfindung betrifft eine Elektrodenstruktur für eine Brennstoffzelle, umfassend einen flachen Träger und eine auf mindestens einer der beiden Flachseiten des Trägers angeordnete katalytische Beschichtung, die das geträgerte Katalysatormaterial gemäß der vorliegenden Erfindung umfasst. Dabei ist der Flachträger beispielsweise eine Polymerelektrolytmembran für eine Brennstoffzelle. In diesem Fall spricht man auch von einer katalytisch beschichteten Membran (CCM, *catalytic coated membrane*). Alternativ kann der flache Träger ein gasdurchlässiges elektrisch leitfähiges Substrat sein, beispielsweise eine Gasdiffusionsschicht (GDL) oder eine weitere Trägerschicht der Brennstoffzelle, etwa Kohlenstoffpapier oder dergleichen. Im Fall einer katalytisch beschichteten Gasdiffusionsschicht spricht man auch von einer Gasdiffusionselektrode.

Die Elektrodenstruktur kann hergestellt werden, indem das Katalysatormaterial direkt auf den flachen Träger geschichtet wird. Zu diesem Zweck wird eine Suspension oder Paste hergestellt, umfassend das Katalysatormaterial, ein Lösungsmittel und gegebenenfalls weitere Zusatzstoffe, wie Bindemittel oder dergleichen, und mit einem beliebigen Verfahren auf den flachen Träger aufgeschichtet und getrocknet.

Ein weiterer Aspekt der vorliegenden Erfindung betrifft eine Brennstoffzelle mit einer Polymerelektrolytmembran und jeweils eine auf Flachseiten von dieser angeordneten Schicht, von der mindestens eine das geträgerte Katalysatormaterial der Erfindung umfasst.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines geträgerten Katalysatormaterials gemäß einer ersten Ausgestaltung der Erfindung;
- Figur 2: eine schematische Darstellung eines geträgerten Katalysatormaterials gemäß einer zweiten Ausgestaltung der Erfindung;
- Figur 3: eine schematische Darstellung eines geträgerten Katalysatormaterials gemäß einer dritten Ausgestaltung der Erfindung;
- Figur 4: eine schematische Darstellung eines geträgerten Katalysatormaterials gemäß einer vierten Ausgestaltung der Erfindung;
- Figur 5: eine schematische Darstellung eines geträgerten Katalysatormaterials gemäß einer fünften Ausgestaltung der Erfindung;
- Figur 6: eine schematische Darstellung eines geträgerten Katalysatormaterials auf molekularer Ebene gemäß der fünften Ausgestaltung der Erfindung;
- Figur 7: eine schematische Darstellung eines geträgerten Katalysatormaterials gemäß einer sechsten Ausgestaltung der Erfindung, und
- Figur 8: eine Schnittdarstellung einer Brennstoffzelle mit einem erfindungsgemäßen Katalysatormaterial.

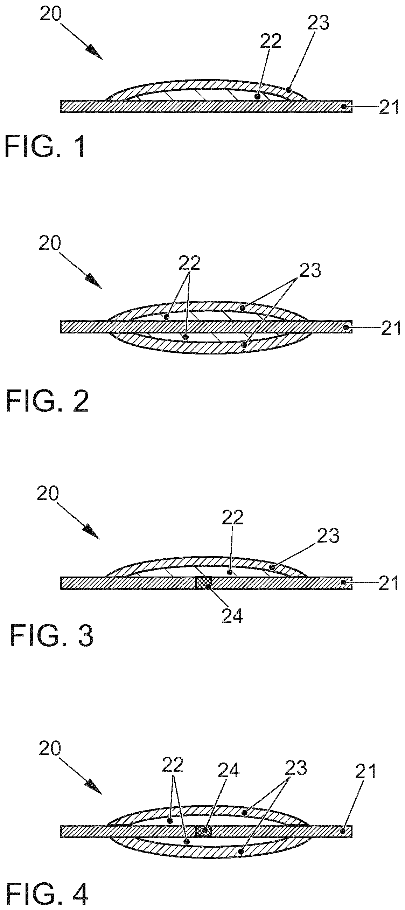

Figuren 1 bis 7 zeigen stark schematisiert und idealisiert geträgerte Katalysatormaterialien gemäß der vorliegenden Erfindung. Dargestellt ist jeweils ein sehr stark vergrößerter Ausschnitt des Materials als Schnitt durch eine beispielhafte Struktur. Dabei werden für übereinstimmende Elemente die gleichen Bezugszeichen verwendet und nicht für jede Ausführung im Einzelnen erläutert.

Das insgesamt mit 20 bezeichnete geträgerte Katalysatormaterial gemäß Figur 1 weist ein elektrisch leitfähiges kohlenstoffbasiertes Trägermaterial 21 auf, das aus den vorstehend genannten Materialien gewählt ist, hier beispielsweise Carbon Black. Auf dem Trägermaterial 21 ist eine abgeschiedene Carbid-haltige Schicht 22 angeordnet, die aus einem der vorstehend genannten Materialien gewählt ist, hier beispielsweise Titan Ti. Zumindest an der Grenzfläche zwischen dem Trägermaterial 21 und der Carbid-haltigen Schicht 22 sind Carbide, hier Titancarbid TiC, oder carbidartige Bindungen ausgebildet, das heißt, hier kommt es zu einer chemischen, insbesondere kovalenten Bindung zwischen diesen beiden Schichten 21, 22. Auf der Oberfläche der Carbid-haltigen Schicht 22 ist eine abgeschiedene katalytische Schicht 23 eines katalytisch aktiven Edelmetalls oder einer Legierung eines solchen angeordnet, das aus einem der vorstehend genannten Materialien gewählt ist, hier beispielsweise Platin Pt. An der Grenzfläche zwischen der Carbid-haltigen Schicht 22 und der katalytischen Schicht 23 ist eine Legierung aus dem Carbidbildner Ti und dem Edelmetall Pt ausgebildet, sodass auch hier eine stoffschlüssige Verbindung vorliegt. Das Gefüge aus Carbid-haltiger Schicht 22 und katalytischer Schicht 23 liegt in Form einer Vielzahl diskreter katalytischer Strukturen oder Partikeln vor, von der hier lediglich eine dargestellt ist.

Das Katalysatormaterial gemäß Figur 2 unterscheidet sich von dem in Figur 1 dadurch, dass die katalytischen Strukturen beidseitig auf dem Trägermaterial 21 aufgewachsen sind. In Abweichung von der gezeigten symmetrischen Anordnung können die Strukturen auch nicht symmetrisch auf beiden Seiten des Trägermaterials 21 angeordnet sein.

Die Katalysatormaterialien 20 gemäß Figur 1 und 2 können hergestellt werden, indem zunächst der Carbidbildner Ti mittels eines Gasphasenabscheidungsprozesses auf dem kohlenstoffbasierten Trägermaterial 21 unter Bildung der Carbid-haltigen Schicht 22 mit der gewünschten Schichtdicke abgeschieden wird. Dabei kommt es zu einer initialen lokalen Abscheidung und Carbidbildung einzelner Titanatome und einem Anwachsen der Schicht 22 durch Anlagerung weiterer Titanatome an diese "Keime". Nach Erreichen der gewünschten Schichtdicke von beispielsweise 1 bis 10 Atomlagen Ti erfolgt anschließend durch einen weiteren Gasphasenabscheidungsprozess das Abscheiden des Edelmetalls Pt auf der Carbid-haltigen Schicht 22 unter Ausbildung der katalytischen Schicht 23. Nach Erreichen der gewünschten Schichtdicke von beispielsweise 1 bis 5 Atomlagen Pt erhält man das Katalysatormaterial 20. Ob die katalytischen Strukturen ein oder beidseitig auf dem Trägermaterial 21 anwachsen, hängt in erster Linie von der Zugänglichkeit der verschiedenen Seiten des Trägermaterials ab.

Das in Figur 3 gezeigte Katalysatormaterial 20 unterscheidet sich von dem in Figur 1 dadurch, dass das kohlenstoffbasierte Trägermaterial 21 Defektstellen 24 aufweist. Dabei handelt es sich im vorliegenden Beispiel um einen Gitterdefekt im Kristallgitter des Kohlenstoffs.

Das in Figur 4 gezeigte Katalysatormaterial 20 entspricht im Wesentlichen dem in Figur 3, außer dass ähnlich wie in Figur 2 die katalytischen Strukturen beidseitig auf dem Kohlenstoffträger 21 aufgewachsen sind.

Die Katalysatormaterialien 20 gemäß Figur 3 und 4 können mit einem Verfahren analog dem für die Ausführungsbeispiele gemäß den Figuren 1 und 2 hergestellt werden, außer dass vor dem Abscheidungsprozess des Carbidbildners das Kohlenstoffträgermaterial 21 einem Behandlungsverfahren, beispielsweise einer Plasmabehandlung zur Erzeugung der Defektstellen 24 unterzogen wird. Die hierdurch erzeugten Defektstellen 24 begünstigen die initiale Ablagerung und Keimbildung des Carbidbildners.

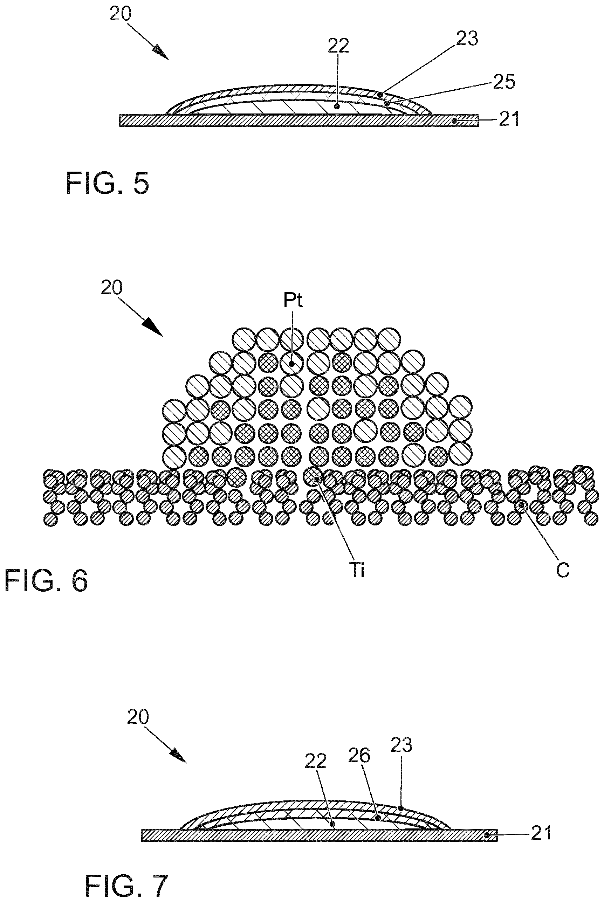

Die Figuren 5 und 6 zeigen eine weitere Ausgestaltung eines erfindungsgemäßen Katalysatormaterials 20. In Abwandlung zu den Materialien gemäß den Figuren 1 bis 4 liegt hier zwischen der Carbid-haltigen Schicht 22 und der katalytischen Schicht 23 eine Mischschicht 25 vor, die aus eine Mischung oder Legierung des Carbidbildners und des katalytischen Edelmetalls, hier einer Pt-Ti-Legierung, besteht. Insbesondere ist die Mischschicht 25 so ausgebildet, dass der Anteil von Ti von innen nach außen sinkt und der Anteil von Pt gegenläufig ansteigt. Somit kann der gesamte Schichtaufbau 22, 25, 23 auch als eine einzige kontinuierliche Schicht beschrieben werden, innerhalb welcher der Titananteil von 100 % (innen) auf 0 % (äußere Oberfläche) fällt und der Platinanteil von 0 % (innen) auf 100 % auf der Oberfläche ansteigt. Nach einer weiteren Ausgestaltung weist die Mischschicht 25 eine homogene Pt-Ti-Legierung auf, das heißt ohne einen Konzentrationsgradienten. Außerdem kann auch der Schichtaufbau gemäß den Figuren 5 und 6 beidseitig auf dem Kohlenstoffträger 21 aufgewachsen sein (analog Figur 2 und 3) und/oder mit der Erzeugung einer Defektstelle 24 im Kohlenstoffträger 21 kombiniert werden (analog Figur 3 und 4).

Das Material 20 gemäß den Figuren 5 und 6 kann hergestellt werden, indem während eines kontinuierlichen Gasphasenabscheidungsprozesses die Zusammensetzung der Gasphase kontinuierlich variiert wird.

Eine weitere Ausführung des erfindungsgemäßen Katalysatormaterials 20 ist in Figur 7 gezeigt. In Abwandlung zu den Materialien gemäß den Figuren 1 bis 4 liegt hier zwischen der Carbid-haltigen Schicht 22 und der katalytischen Schicht 23 eine Diffusionsbarriereschicht 26, aus einem der vorgenannten Materialien vor, hier beispielsweise Gold Au. Die Diffusionsbarriereschicht 26 verhindert die Diffusion des unedleren Carbidbildners auf die Oberfläche der katalytischen Struktur und somit sein Herauslösen. Das Material 20 gemäß Figur 7 kann hergestellt werden, indem nach der Abscheidung des Carbidbildners in einem zusätzlichen Gasphasenabscheidungsschritt das Material der Diffusionsbarriereschicht 26 auf die Schicht 22 abgeschieden wird und anschließend das katalytische Edelmetall auf die Diffusionsbarriereschicht 26 abgeschieden wird.

Um eine Elektrode für eine Brennstoffzelle herzustellen, wird aus dem katalytischen Material 20 gemäß der Erfindung zunächst eine Zusammensetzung (Aufschlämmung, Paste oder dergleichen) hergestellt, die neben dem katalytischen Material 20 ein Lösungsmittel enthält und weitere Zusatzstoffe enthalten kann, insbesondere einen polymeren Binder. Diese Zusammensetzung wird dann auf einem flachen Träger als Beschichtung aufgebracht, wofür ein beliebiges Beschichtungsverfahren, beispielsweise Streichen, Sprühen, Rakeln, Drucken oder dergleichen verwendet werden kann. Bei dem flachen Träger handelt es sich insbesondere um eine Polymerelektrolytmembran der Brennstoffzelle, die vorzugsweise beidseitig mit dem katalytischen Material beschichtet wird. Alternativ kann die katalytische Beschichtung auch auf einer Gasdiffusionslage aufgebracht werden oder auf einem anderen gasdurchlässigen elektrisch leitfähigen Substrat, wie Kohlenstoffpapier.

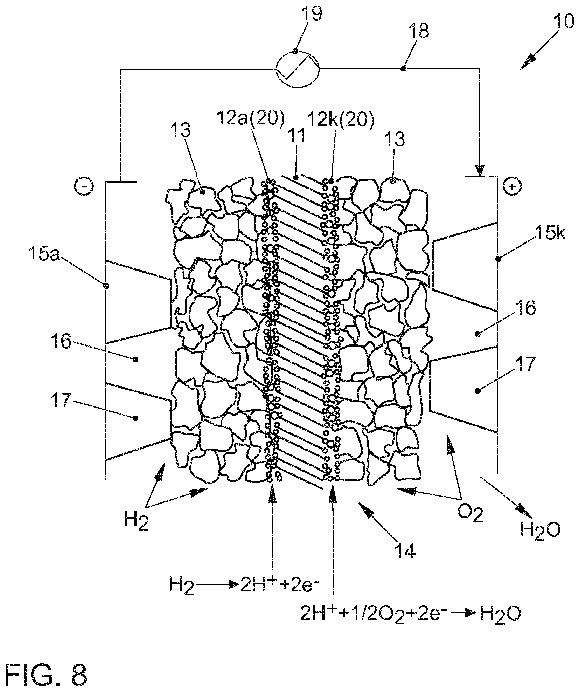

Figur 8 zeigt den Aufbau einer solchen Brennstoffzelle 10 in einer schematischen Schnittdarstellung. Kernstück der Brennstoffzelle 10 ist eine insgesamt mit 14 bezeichnete Membran-Elektroden-Anordnung (MEA). Die MEA 14 umfasst eine Polymerelektrolytmembran 11, zwei auf deren Flachseiten angeordnete katalytische Elektroden oder katalytische Beschichtungen, nämlich eine Anode 12a und eine Kathode 12k, sowie zwei beidseitig daran angeordnete Gasdiffusionslagen 13. Bei der Polymerelektrolytmembran 11 handelt es sich um ein Ionen leitendes, insbesondere Protonen leitendes Polymer, beispielsweise ein unter dem Handelsnamen Nafion^{®} vertriebenes Produkt. Die katalytischen Elektroden 12a, 12k umfassen das katalytische Material gemäß der Erfindung und sind im dargestellten Beispiel als beidseitige Beschichtung der Membran 11 ausgeführt. Die Gasdiffusionslagen 13 bestehen aus einem gasdurchlässigen elektrisch leitfähigen Material, das beispielsweise die Struktur eines Schaums oder einer Faserstruktur oder dergleichen aufweist und der Verteilung der Reaktionsgase an die Elektroden 12a und 12k dient. Beidseitig an die Membran-Elektroden-Anordnung 14 schließen Bipolarplatten 15 an, nämlich eine Anodenplatte 15a und eine Kathodenplatte 15k. Üblicherweise sind eine Vielzahl solcher Einzelzellen 10 zu einem Brennstoffzellenstapel gestapelt, sodass jede Bipolarplatte sich aus einer Anodenplatte 15a und einer Kathodenplatte 15k zusammensetzt. Die Bipolarplatten 15a, 15k umfassen jeweils eine Struktur von Reaktantenkanälen 16, die in Richtung der Gasdiffusionslagen 13 offen ausgebildet sind und der Zuführung und Verteilung der Reaktanten der Brennstoffzelle dienen. So wird über die Reaktantenkanäle 16 der Anodenplatte 15a der Brennstoff, hier Wasserstoff H₂, zugeführt und über die entsprechenden Kanäle 16 der Kathodenplatte 15k Sauerstoff O₂ oder ein sauerstoffhaltiges Gasgemisch, insbesondere Luft. Die Bipolarplatten 15a, 15k sind über einen äußeren Stromkreis 18 miteinander und mit einem elektrischen Verbraucher 19, beispielsweise einen Traktionsmotor für ein Elektrofahrzeug oder eine Batterie, verbunden.

Im Betrieb der Brennstoffzelle 10 wird über die Reaktantenkanäle 16 der Anodenplatte 15a der Wasserstoff zugeführt, über die anodenseitige Gasdiffusionslage 13 verteilt und der katalytischen Anode 12a zugeführt. Hier erfolgt eine katalytische Dissoziation und Oxidation von Wasserstoff H₂ zu Protonen H⁺ unter Abgabe von Elektronen, die über den Stromkreis 18 abgeführt werden. Auf der anderen Seite wird über die Kathodenplatte 15k der Sauerstoff über die kathodenseitige Gasdiffusionslage 13 zu der katalytischen Kathode 12k geleitet. Gleichzeitig diffundieren die anodenseitig gebildeten Proteinen H⁺ über die Polymerelektrolytmembran 11 in Richtung Kathode 12k. Hier reagiert an dem katalytischen Edelmetall der zugeführte Luftsauerstoff unter Aufnahme von den über den äußeren Stromkreis 18 zugeführten Elektronen mit den Protonen zu Wasser, welches mit dem Reaktionsgas aus der Brennstoffzelle 10 abgeführt wird. Durch den so erzeugten elektrischen Stromfluss kann der elektrische Verbraucher 19 versorgt werden.

Das Katalysatormaterial 20 gemäß der vorliegenden Erfindung kann für die Anode 12a und/oder die Kathode 12k von Brennstoffzellen verwendet werden. Die mit dem erfindungsgemäßen katalytischen Material 20 ausgestattete Brennstoffzelle 10 zeichnet sich dadurch aus, dass die katalytischen Elektroden 12a, 12k eine geringe Korrosionsneigung und somit hohe Langzeitstabilität aufweisen. Gleichzeitig wird vergleichsweise wenig katalytisches Edelmetall benötigt, da das Hauptvolumen des katalytischen Materials der Elektroden durch ein vergleichsweise kostengünstiges Material gebildet wird.

### Bezugszeichenliste

- 10: Brennstoffzelle
- 11: Polymerelektrolytmembran
- 12: katalytische Elektrode
- 12a: Anode
- 12k: Kathode
- 13: Gasdiffusionsschicht
- 14: Membran-Elektroden-Anordnung
- 15: Bipolarplatte
- 15a: Anodenplatte
- 15k: Kathodenplatte
- 16: Reaktantenkanal
- 17: Kühlmittelkanal
- 18: Stromkreis
- 19: elektrischer Verbraucher / elektrische Last

- 20: geträgertes Katalysatormaterial
- 21: kohlenstoffbasierte Trägermaterial
- 22: Carbid-haltige Schicht
- 23: katalytische Schicht
- 24: Defektstelle
- 25: Mischschicht
- 26: Diffusionsbarriereschicht

## Patentansprüche

1. Verfahren zur Herstellung eines geträgerten Katalysatormaterials (20) für eine Brennstoffzellenelektrode, umfassend die Schritte:
- Bereitstellen eines elektrisch leitfähigen, kohlenstoffbasierten Trägermaterials (21);
- Abscheiden einer Carbid bildenden Substanz aus der Gasphase auf das kohlenstoffbasierte Trägermaterial (21) unter Erzeugung einer Carbid-haltigen Schicht (22) durch chemische Reaktion der Carbid bildenden Substanz mit dem Kohlenstoff des Trägermaterials (21) und
- Abscheiden eines katalytisch aktiven Edelmetalls oder einer Legierung eines solchen aus der Gasphase unter Ausbildung einer katalytischen Schicht (23).

2. Verfahren nach Anspruch 1, **dadurch gekennzeichnet, dass** die Carbid bildende Substanz ausgewählt ist aus der Gruppe umfassend Titan (Ti), Zirkonium (Zr), Hafnium (Hf), Wolfram (W), Molybdän (Mo), Bor, (B), Vanadium (V), Aluminium (AI), Scandium (Sc), Yttrium (Y), Silizium (Si), Chrom (Cr) und Nickel (Ni) oder eine Mischung von diesen.

3. Verfahren nach Anspruch 1 oder 2, **dadurch gekennzeichnet, dass** eine Schichtdicke der Carbid-haltigen Schicht (22) im Bereich von 1 bis 50 Atomlagen, insbesondere von 1 bis 20 Atomlagen, beträgt.

4. Verfahren nach einem der vorhergehenden Ansprüche, **dadurch gekennzeichnet, dass** das katalytisch aktive Edelmetall oder seine Legierung Platin (Pt), Ruthenium (Ru), Rhodium (Rh), Palladium (Pd), Osmium (Os), Iridium (Ir) oder eine Legierung dieser Metalle umfasst, insbesondere Platin (Pt).

5. Verfahren nach einem der vorhergehenden Ansprüche, **dadurch gekennzeichnet, dass** das Abscheiden der Carbid bildenden Substanz und das Abscheiden des katalytisch aktiven Edelmetalls oder seiner Legierung einander überschneidend unter Erzeugung einer graduellen Anreicherung des katalytisch aktiven Edelmetalls oder seiner Legierung in den abgeschiedenen Schichten erfolgt.

6. Verfahren nach einem der vorhergehenden Ansprüche, **dadurch gekennzeichnet, dass** vor dem Abscheiden der Carbid bildenden Substanz Defektstellen in Form von Fehlern in der Kristallgitterstruktur des Kohlenstoffs und/oder Funktionalisierungen (24) in Form von kovalent an den Kohlenstoff des Trägers gebunden Gruppen auf der Oberfläche des kohlenstoffbasierten Trägermaterials (21) erzeugt werden, insbesondere durch Behandlung mit einem Gasplasma, mit einem chemischen Agens, mit einer Teilchenstrahlung oder mit einer elektromagnetischen Strahlung.

7. Verfahren nach einem der vorhergehenden Ansprüche, **dadurch gekennzeichnet, dass** das Gefüge aus Carbid-haltiger Schicht (22) und katalytischer Schicht (23) in Form von auf dem kohlenstoffbasierten Trägermaterial angeformten und voneinander getrennten katalytischen Strukturen auf dem kohlenstoffbasierten Trägermaterial vorliegt.

8. Verfahren nach einem der vorhergehenden Ansprüche, **dadurch gekennzeichnet, dass** nach dem Abscheiden der Carbid bildenden Substanz und vor dem Abscheiden des katalytisch aktiven Edelmetalls oder seiner Legierung eine Diffusionsbarriereschicht (26) abgeschieden wird, ausgewählt aus der Gruppe umfassend Gold (Au), Palladium (Pd), Ruthenium (Ru) Wolfram (W), Osmium (Os), Rhodium (Rh) und Iridium (Ir) oder eine Mischung oder Legierung von diesen.

9. Elektrodenstruktur für eine Brennstoffzelle (10), umfassend einen flachen Träger (11, 13), ausgewählt aus einer Polymerelektrolytmembran (11) und einem gasdurchlässigen elektrisch leitfähigen Substrat (13), und einer auf mindestens einer Flachseite des Trägers (11, 13) angeordneten katalytischen Beschichtung (12a, 12k) umfassend ein nach einem der Ansprüche 1 bis 8 hergestelltes geträgertes Katalysatormaterial (20), wobei das Katalysatormaterial (20) ein elektrisch leitfähiges, kohlenstoffbasiertes Trägermaterial (21), eine auf dem Trägermaterial (21) abgeschiedene Carbid-haltige Schicht (22) und ein auf der Oberfläche der Carbid-haltigen Schicht (22) abgeschiedene katalytische Schicht (23) eines katalytisch aktiven Edelmetalls oder einer Legierung eines solchen umfasst.

## Claims

1. A method of producing a supported catalyst material (20) for a fuel cell electrode, comprising the steps of:
- providing an electrically conductive carbon-based support material (21);
- depositing a carbide-forming substance from the gas phase onto the carbon-based support material (21) to from a carbide-containing layer (22) by chemical reaction of the carbide-forming substance with the carbon of the support material (21) and
- depositing a catalytically active noble metal or an alloy of a noble metal from the gas phase to form a catalytic layer (23).

2. The method according to claim 1, **characterized in that** the carbide-forming substance is selected from the group comprising titanium (Ti), zirconium (Zr), hafnium (Hf), tungsten (W), molybdenum (Mo), boron (B), vanadium (V), aluminium (Al), scandium (Sc), yttrium (Y), silicon (Si), chromium (Cr), and nickel (Ni) or a mixture of these.

3. The method according to claim 1 or 2, **characterized in that** a layer thickness of the carbide-containing layer (22) is in the range from 1 to 50 atomic layers, in particular from 1 to 20 atomic layers.

4. The method according to one of the preceding claims, **characterized in that** the catalytically active noble metal or its alloy comprises platinum (Pt), ruthenium (Ru), rhodium (Rh), palladium (Pd), osmium (Os), iridium (Ir), or an alloy of these metals, in particular platinum (Pt).

5. The method according to one of the preceding claims, **characterized in that** the deposition of the carbide forming substance and the deposition of the catalytically active noble metal or its alloy overlap one another to produce a gradual enrichment of the catalytically active noble metal or alloy thereof in the deposited layers.

6. The method according to one of the preceding claims, **characterized in that** prior to the deposition of the carbide-forming substance, defect sites in the form of defects in the crystal lattice structure and/or functionalization (24) in the form of groups covalently bonded to the carbon of the support on the surface of the carbon-based support material (21) are produced, in particular by treatment with a gas plasma, with an agent, with particle radiation or with electromagnetic radiation.

7. The method according to one of the preceding claims, **characterized in that** the structure of carbide-containing layer (22) and catalytic layer (23) is present in the form of carbon-based substrates formed and separated from each other catalytic structures on the carbon-based carrier material.

8. The method according to any one of the preceding claims, **characterized in that** after the deposition of the carbide-forming substance and before the deposition of the catalytically active noble metal or its alloy, a diffusion barrier layer (26), selected from the group comprising gold (Au), palladium (Pd), ruthenium (Rh), tungsten (W), osmium (Os), rhodium (Rh), and iridium (Ir), or a mixture or alloy of these.

9. An Electrode structure for a fuel cell (10), comprising a flat support (11, 13) selected from a polymer electrolyte membrane (11) and a gas-permeable electrically conductive substrate (13), and an electrode structure disposed on a catalytic coating (12a, 12k) disposed on at least one flat side of the support (11, 13) comprising a supported catalyst material (20) prepared according to any one of claims 1 to 8, wherein the catalyst material (20) is an electrically conductive carbon-based support material (21), a carbide-containing layer (22) deposited on the support material (21), and a catalytic layer (23) of a catalytically active noble metal or an alloy thereof deposited on the surface of the carbide-containing layers (22).

## Revendications

1. Procédé de fabrication d'un matériau catalytique supporté (20) pour une électrode de piles à combustible, comprenant les étapes consistant à :
- fournir un matériau support à base de carbone (21) électroconducteur ;
- déposer une substance formant du carbure à partir de la phase gazeuse sur le matériau support à base de carbone (21) en générant une couche contenant du carbure (22) par réaction chimique de la substance formant du carbure avec le carbone du matériau support (21) et
- déposer un métal précieux catalytiquement actif ou un alliage d'un tel métal à partir de la phase gazeuse en formant une couche catalytique (23).

2. Procédé selon la revendication 1, **caractérisé en ce que** la substance formant du carbure est sélectionnée à partir du groupe comprenant du titane (Ti), du zirconium (Zr), du hafnium (Hf), du tungstène (W), du molybdène (Mo), du bore (B), du vanadium (V), de l'aluminium (AI), du scandium (Sc), de l'yttrium (Y), du silicium (Si), du chrome (Cr) et du nickel (Ni) ou un mélange de ceux-ci.

3. Procédé selon la revendication 1 ou 2, **caractérisé en ce qu'**une épaisseur de couche de la couche contenant du carbure (22) est dans la plage de 1 à 50 couches atomiques, en particulier de 1 à 20 couches atomiques.

4. Procédé selon l'une quelconque des revendications précédentes, **caractérisé en ce que** le métal précieux catalytiquement actif ou son alliage comprend du platine (Pt), du ruthénium (Ru), du rhodium (Rh), du palladium (Pd), de l'osmium (Os), de l'iridium (Ir) ou un alliage de ces métaux, en particulier du platine (Pt).

5. Procédé selon l'une quelconque des revendications précédentes, **caractérisé en ce que** le dépôt de la substance formant du carbure et le dépôt du métal précieux catalytiquement actif ou de son alliage se chevauchent en générant un enrichissement graduel du métal précieux catalytiquement actif ou de son alliage dans les couches déposées.

6. Procédé selon l'une quelconque des revendications précédentes, **caractérisé en ce que**, avant le dépôt de la substance formant du carbure, des endroits de défaut sous forme de défauts dans la structure de réseau cristallin du carbone et/ou des fonctionnalisations (24) sous forme de groupes liés de manière covalente au carbone du support sont créés sur la surface du matériau support à base de carbone (21), en particulier par traitement avec un plasma de gaz, avec un agent chimique, avec un rayonnement de particules ou avec un rayonnement électromagnétique.

7. Procédé selon l'une quelconque des revendications précédentes, **caractérisé en ce que** la structure de la couche contenant du carbure (22) et de la couche catalytique (23) se présente sous forme de structures catalytiques formées sur le matériau support à base de carbone et séparées les unes des autres sur le matériau support à base de carbone.

8. Procédé selon l'une quelconque des revendications précédentes, **caractérisé en ce qu'**après le dépôt de la substance formant du carbure et avant le dépôt du métal précieux catalytiquement actif ou de son alliage, une couche barrière de diffusion (26) est déposée, sélectionnée à partir du groupe comprenant de l'or (Au), du palladium (Pd), du ruthénium (Ru), du tungstène (W), de l'osmium (Os), du rhodium (Rh) et de l'iridium (Ir) ou un mélange ou un alliage de ceux-ci.

9. Structure d'électrodes pour une pile à combustible (10), comprenant un support plat (11, 13), sélectionné parmi une membrane d'électrolyte polymère (11) et un substrat électroconducteur perméable au gaz (13), et un revêtement catalytique (12a, 12k) disposé sur au moins un côté plat du support (11, 13), comprenant un matériau catalyseur supporté (20) préparé selon l'une quelconque des revendications 1 à 8, dans laquelle le matériau catalyseur (20) comprend un matériau support à base de carbone électroconducteur (21), une couche contenant du carbure (22) déposée sur le matériau support (21) et une couche catalytique (23) d'un métal précieux catalytiquement actif ou d'un alliage de celui-ci déposée sur la surface de la couche contenant du carbure (22).
